# EUROPEAN PATENT SPECIFICATION

(11) **EP 2 225 013 B1**
(45) Date of publication and mention of the grant of the patent: **15.06.2016**
(21) Application number: 08857972.7
(22) Date of filing: 05.12.2008
(51) Int. Cl.: B01F 3/04, F04F 1/00

(54) **DEVICE TO INFUSE GAS INTO LIQUID**
VERFAHREN ZUM INFUNDIEREN VON GAS IN FLÜSSIGKEIT
DISPOSITIF POUR INFUSER DU GAZ DANS UN LIQUIDE

(30) Priority: 07.12.2007 US 12077 P
(43) Date of publication of application: 08.09.2010
(73) Proprietor: Blue Planet Environmental Inc., Richmond Hill, Ontario L4C 9W8 (CA)
(72) Inventor: BURNS, David, Richmond Hill Ontario L4C 9W8 (CA); YEO, Jason, Richmond Hill Ontario L4C 9W8 (CA); LONETTO, Richard, Richmond Hill Ontario L4C 9W8 (CA)
(74) Representative: Vaughan, Christopher Tammo
(86) International application number: PCT/CA2008/002136
(87) International publication number: WO 2009/070893

(56) References cited:
- EP-A1- 1 116 517
- WO-A1-2008/102784
- CA-A1- 1 007 770
- GB-A- 2 059 790
- US-A- 3 709 363
- US-A- 3 794 303
- US-A- 3 840 216
- US-A- 3 910 838
- US-A- 4 278 546
- US-A- 4 337 152
- US-A- 5 741 443

## Description

### Field of the Invention

This invention relates to an improved device to impart gas into liquid. In particular the device of the invention comprises a device which infuses fluid with gas, allows for off gassing and moves liquid through the device from an intake opening to a discharge opening.

### Background Of The Invention

In the mid 1600's the poet Edward Baynard wrote, "Give it motion, Room, and Air Its purity ne'er impair". With reference to the ongoing health concerns from the return of the Bubonic Plague in 1603 and the knowledge of aeration and its effects on water. The first municipal aeration system installed in the US was Elmira NY waterworks in 1860, which cascaded water down steps to remove volatile organic compounds and stop septic odor conditions. There is also pictorial evidence that the Chinese used paddlewheels to destagnate drinking water in 780 AD.

The term aeration is generally used to describe any device that induces air into water, but can also be used to infuse any gas into any liquid. Typical aeration devices are shown for example in the following patents:
- JP-2000-271591
- US-6117324
- JP-2005-010435
- WO-2008-140229

Though such devices have achieved popularity and commercial success, there has been a continued need for improvement. JP-2000-271591 (Prior Patent 1) shows a gas diffusion device that is free to operate un-contained in a fluid body. The rising bubbles of gas are then collected via an inverted funnel under the surface of the fluid. In the 'neck down' portion of the funnel, the gas is forced to have extended interaction with the surrounding fluid before it rises up through the spout of the funnel and returns to the fluid body.

Although Prior Patent 1 is an airlift design, it inherently adds too much restriction and limits the flow and therefore the amount of fluid that can be gas infused. Prior Patent 1 does not make use of the energy imparted to the fluid to transfer it back to deep water, it simply returns it to the same body or one of the same elevation. Prior Patent 1 would be disrupted or even rendered inoperable in the event there were currents in the fluid body.

US-6117324 (Prior Patent 2) shows a device for infusion of ozone into animal waste to reduce organic pollutants. Prior Patent 2 has several disadvantages such as: (i) it produces anaerobic bacteria that produce odor while digesting the waste; (ii) it does not recapture the energy used to impart the ozone to the waste fluid;(iii) it does not disclose a method of fluid transfer. Prior Patent 2 may kill the beneficial bacteria that could break down the waste because of the ozone injection.

JP-2005-010435 (Prior Patent 3) shows a device for infusing gas into liquid. Prior Patent 3 has a pressurized chamber, three air lift systems stacked in vertical orientation and a water collector at the bottom of the chamber. This invention requires a quite complex method of manufacture and requires a large area outside the fluid holding area and the need for several pumps to make it function.

WO-2008-140229 shows an aeration device in the form of a motor driving a shaft which has an impeller below the fluid surface which forces water up a tube to the surface where it comes in contact with the atmospheric air.

Other devices are known from US 5,741,443, EP 1 116 517 and US-A-3,840,216 US 3,794,303.

There is a need for an improved device to infuse gas into liquid.

### Summary Of The Invention

In accordance with an aspect of the invention there is provided a device for infusion of gas into fluid, off gassing said fluid and returning said off gassed fluid to a body of fluid, comprising: an intake tube portion having an bottom opening submergable below a body of fluid so as to allow entry of fluid into said intake tube; gas diffusion means positioned within said intake tube below the top level of the body of fluid for infusing gas into fluid within said intake tube, to allow said gas to be infused into the liquid in said intake tube whereby the rising bubbles of infused gas are sufficient to drive the liquid in the intake tube upwardly to a top portion of the intake tube; a cross tube section in communication with said intake tube portion, said cross tube section extending to an off gassing section of or above said cross tube section; characterized in that the device is configured such that, when submerged to a predetermined depth in the body of fluid, the device fills with fluid to a top of the off gassing section which is located at a level above a surface of the body of fluid and above the cross tube section, thereby to generate a head differential; and further characterized by said off gassing section allowing said liquid to have surface exchange with the air and thus removal of gasses from the liquid; and a discharge tube portion communicating with the cross tube section, being positioned immediately below said off gas section and extending downwardly therefrom into the body of fluid, whereby the fluid entering the discharge tube has imparted a downward velocity due to the head differential between the liquid at the top of the off gassing section, pushing it down the discharge tube and back in the body of fluid.

Other advantages, features and characteristics of the present invention, as well as methods of operation and functions of the related elements of the structure, and the combination of parts and economies of manufacture, will become more apparent upon consideration of the following detailed description and the appended claims with reference to the accompanying drawings, the latter being briefly described hereinbelow.

### Brief Description of Drawings

Reference to an example embodiment of the invention will now be made in the accompanying drawings in which:
Figure 1 is a front elevation view of an example embodiment of a device of the invention showing intake, cross tube, off gassing and discharge and the liquid flow path;
Figure 2 is a front elevation view of an example embodiment of a device of the invention showing the unit running and showing the achieved head difference;

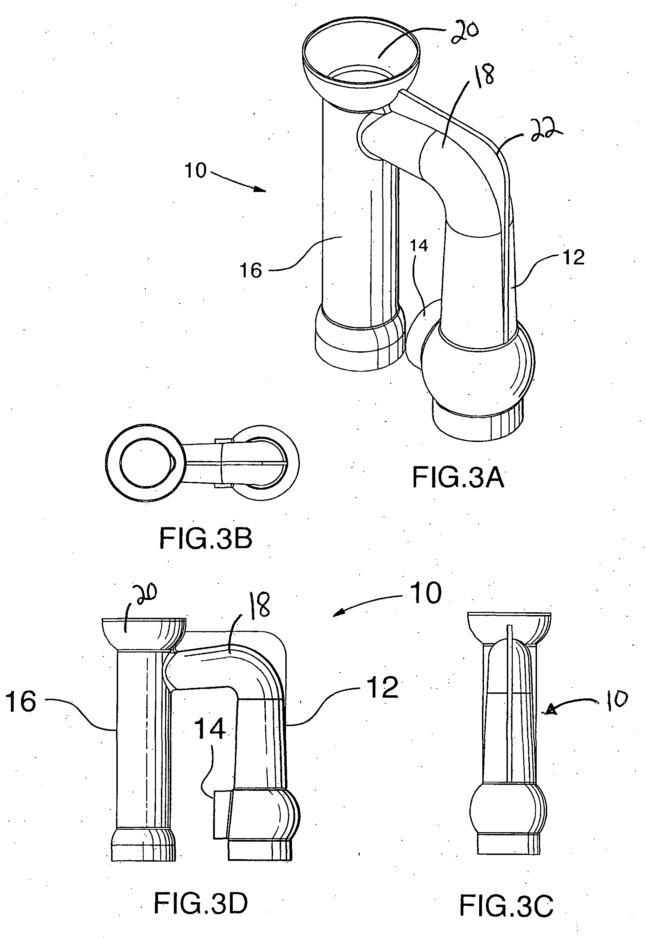

Figure 3A is a perspective view of an example embodiment of the invention;
Figures 3B top view of the embodiment of Figure 3A;
Figure 3C front view of the embodiment of Figure 3A; and
Figure 3D is a side view of the embodiment of Figure 3A.

In the example embodiment of the invention, the Device is made of sealed, connected tubular construction resembling a lower case 'h', comprising molded plastic. Other suitable materials may be utilized as desired.

The example device 10 is made such that during standard operation it is submerged in liquid with only the off gassing portion 20 protruding above the surface of the liquid. The example device 10 may be made such that during non standard operation it can be submerged such that only the diffusion device 14 is under the liquid. This is particularly advantageous when using the device as a pump to transfer liquid.

To achieve the desired goals of infusing gas into the fluid, the example device 10 can be modularly added onto with as many devices as required, in various configurations and may be suspended in position by any method of securement (such as for example floats and securing brackets to a fixed object in or adjacent the body of water) without affecting its functionality. The example embodiment of the invention includes a flange portion 22 extending above the cross tube portion 18, which acts to provide support to the structure and to assist in locating and securing/bracketing the device against a fixed object as desired.

When operating, the example device imparts gas into the liquid by means of diffusion device 14 into liquid in the intake tube 12. The rising bubbles of gas drive the liquid in the intake tube portion upwardly, giving the liquid upward velocity. This velocity drives the liquid to the top of the intake tube, across the cross tube 18 and to the top of the off gassing section 20. In the example embodiment shown, the cross tube 18 is angled slightly downwardly from intake tube to discharge tube to facilitate flow of liquid from intake tube to discharge tube portion.

It should be understood that the diffusion device for imparting gas into liquid can be any gas dispersion unit, i.e. airstone, permeable membrane, felt stack etc. The preferred diffusion device 14 is incorporated into a cap that seals against the device to ensure that no gas escapes the tubular construction. It can be placed in any location in the intake tube, but the further under the surface of the fluid, the greater the velocity the bubble achieves on its accent up the tube and the more energy it imparts to the fluid in the intake tube.

The liquid in the intake tube is pulled from the surrounding fluid body by a low pressure zone due to the rising liquid in the intake tube. This principal is what is noted by the flow of fluids from high to low pressure areas as witnessed by Bernoulli.

When operating, the diffusion device imparts gas into the intake tube causing a vertical flow of fluid in the example device. If the pressure (in kPa) of gas infused into the liquid is greater or equal to 9.793 x (distance the diffuser is below the fluid line in metres) the device will function. The preferred pressure for any device setup is (9.793 x (distance the diffuser is below the fluid line in metres)) + 13.79kPa. [If the pressure (in PSI) of gas infused into the liquid is greater or equal to ((distance the diffuser is below the fluid line in feet)/(2.31)) the device will function. The preferred pressure for any device setup is ((distance the diffuser is below the fluid line in feet)/(2.31))+2psi]. The example device can be scaled as to accept any flow at these equationed pressures.

The example embodiment has a bubble reducing device placed in the upper part of the intake tube to reduce the gas bubbles tendency to group together (coalescence). This device can be, but is not limited to, a mesh or other similar series of segregated passages that have the ability to break larger bubbles to smaller ones. The multitude of smaller bubbles in the fluid stream gives a higher probability that the gas in the bubble will transfer to the surrounding fluid. This feature must be placed above the diffusion device 14 to be effective.

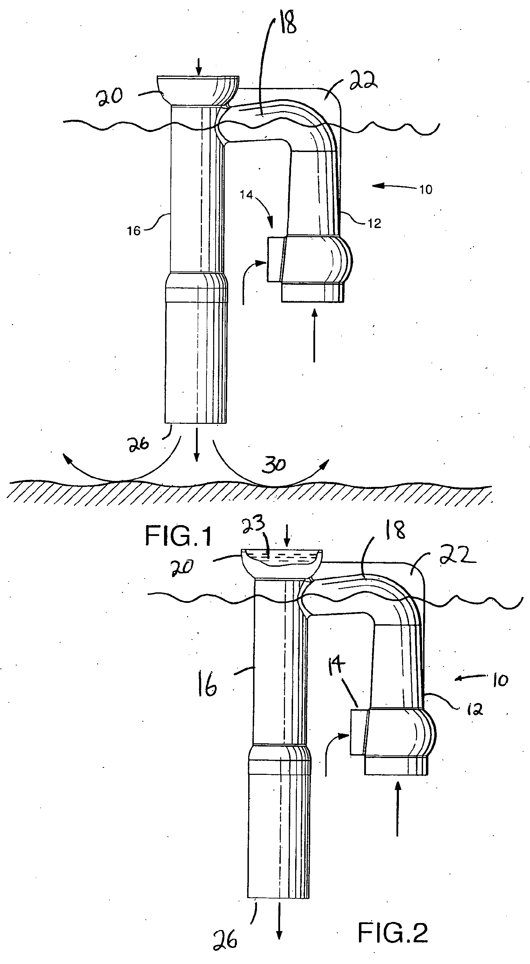

When operating, the example device fills with fluid 23 to the top of the off gassing portion (as seen in Figure 2), which extends above the cross tube portion. This will provide some head differential (in the preferred embodiment a few inches of head differential) to displace the fluid below it in the discharge tube, forcing such fluid out the discharge opening 26.

The rapidly rising fluid in the intake tube travels to the top of the intake tube portion 12 and flows across the cross tube portion 18. The energy imparted from the rising bubbles to the fluid is sufficient that the fluid in the cross tube is above the fluid level outside of the pipe. As the fluid passes through the cross tube section, when the fluid gets to the discharge tube/pipe 16 (positioned below the off gas section 20), the head differential causes the fluid in the discharge tube/pipe to be forced down. With this method, a small energy input in the form of gas pressure can be converted into forcing fluid down to great depths as the fluid in the discharge pipe will always try to equalize with the fluid the device is submerged in.

The fluid in the discharge tube/pipe 16 has a 'downward' velocity due to the head differential above it pushing it down the tube. Because there are still gas bubbles in the fluid stream the downward flow is not laminar. The downward fluid velocity and the tendency of the bubbles to rise cause extreme turbulence in the discharge tube. This turbulence maximizes the time the gas is in contact with the fluid stream enabling extremely efficient transfer of gas from the bubble to the fluid.

Both the inlet tube portion and discharge tube portions are extendable as desired to meet requirements of the device.

In a pond/lake environment, such as shown by example in Figure 1, the example device can successfully take water from the bottom stagnant and septic (hypolimnionic) region 30, bring it to the surface efficiently, off gas the septic causing pollutants (e.g. Phosphorus, Nitrogen, Sulfur etc) and then oxygenate the water and return it to the same strata that it was removed from.

In aquaculture environments, the device can efficiently aerate/oxygenate the water to encourage growth while removing the Nitrogen gasses caused by the fish waste that cause many aquatic diseases.

In bio growth (algae, larvae etc) the device can infuse any gas into the fluid efficiently and encourage the growth of the desired substance.

In a wastewater treatment environment, the Device can infuse any gas to encourage the accelerated breakdown of organic material and reduce the BOD & COD pollutant quotient that has negative effects on the environment when discharged above or below the surface.

The infusion device of the invention has the ability to have extensions attached to the intake and discharge to allow treatment to any depth of waterbody.

It should be understood that many changes, modifications, variations and other uses and applications will become apparent to those skilled in the art after considering the specification and the accompanying drawings. Therefore, any and all such changes, modifications, variations and other uses and applications which do not depart from the scope of the invention are deemed to be covered by the invention.

## Claims

1. A device (10) for infusion of gas into fluid, off gassing said fluid and returning said off gassed fluid to a body of fluid, comprising:
an intake tube portion (12) having an bottom opening submergable below a body of fluid so as to allow entry of fluid into said intake tube (12);
gas diffusion means (14) positioned within said intake tube (12) below the top level of the body of fluid for infusing gas into fluid within said intake tube (12), to allow said gas to be infused into the liquid in said intake tube (12) whereby the rising bubbles of infused gas are sufficient to drive the liquid in the intake tube (12) upwardly to a top portion of the intake tube (12);
a cross tube section (18) in communication with said intake tube portion (12), said cross tube section (18) extending to an off gassing section (20) of or above said cross tube section (18);
**characterized in that** the device (10) is configured such that, when submerged to a predetermined depth in the body of fluid, the device (10) fills with fluid to a top of the off gassing section (20) which is located at a level above a surface of the body of fluid and above the cross tube section (18), thereby to generate a head differential;
and further **characterized by** said off gassing section (20) allowing said fluid to have surface exchange with the air and thus removal of gasses from the liquid; and
a discharge tube portion (16) communicating with the cross tube section (18), being positioned immediately below said off gas section (20) and extending downwardly therefrom into the body of fluid, whereby the fluid entering the discharge tube (16) has imparted a downward velocity due to the head differential between the liquid at the top of the off gassing section (20), pushing it down the discharge tube (16) and back in the body of fluid.

2. A device (10) as claimed in claim 1, wherein:
the intake tube portion (12) is vertically oriented;
the gas diffusion means (14) is positioned within a bottom portion of said intake tube (12); to allow said gas to be infused into the liquid in said intake tube portion (12) whereby the rising bubbles of infused gas drives the liquid in the intake tube (12) upwardly to a top portion of the intake tube (12) and through the cross tube section (18) in communication with said intake tube portion (12);
the cross tube section (18) extends substantially perpendicularly to said intake tube (12) and above said body of fluid to the off gassing section (20);
the off gassing section (20) extends above the cross tube section (18); and
the discharge tube portion (16) is vertically oriented.

3. A device (10) as claimed in any preceding claim, wherein the pressure in kPa of the diffused gas infused into the fluid is greater than or equal to 9.793 times the distance in metres that the diffusion means is below the fluid line.

4. A device as claimed in any preceding claim, wherein the gas diffusion means (14) is located adjacent the bottom opening thereof and the portion of the intake tube (12) including the gas diffusion means (14) and bottom opening is located within the body of fluid, with the remainder of the device (10) above the body of fluid.

5. A device (10) as claimed in any preceding claim, wherein the diffusion means (14) is an airstone, permeable membrane or felt stack gas dispersion unit.

6. A device (10) as claimed in claim 5, wherein the gas dispersion unit (14) is positioned in a cap that seals against the intake tube portion (12) of device to ensure that no gas escapes.

7. A device (10) as claimed in any preceding claim, wherein a bubble reducing device is positioned in the top portion of the intake tube (12), above the diffusion means (14) to reduce the gas bubbles tendency to coalescence.

8. A device (10) as claimed in claim 7, wherein the bubble reducing device comprises a plurality of mesh barriers, forming a series of segregated passages.

9. A device (10) as claimed in any preceding claim, wherein the device (10) is formed of molded plastic.

## Patentansprüche

1. Vorrichtung (10) zum Infundieren von Gas in eine Flüssigkeit, Entgasen dieser Flüssigkeit und Rückführen dieser entgasten Flüssigkeit zu einem Flüssigkeitskörper, umfassend:
einen Aufnahmerohrteil (12) mit einer unteren Öffnung, die unter einem Flüssigkeitskörper eintauchbar ist, um den Eintritt von Flüssigkeit in dieses Aufnahmerohr (12) zu ermöglichen,
innerhalb dieses Aufnahmerohrs (12), unterhalb des obersten Niveaus des Flüssigkeitskörpers positioniertes Gasdiffusionsmittel (14) zum Infundieren von Gas in Flüssigkeit innerhalb dieses Aufnahmerohrs (12), um zu ermöglichen, dass dieses Gas in die Flüssigkeit in diesem Aufnahmerohr (12) infundiert wird, wodurch die aufsteigenden Blasen von infundiertem Gas ausreichend sind, um die Flüssigkeit im Aufnahmerohr (12) aufwärts zu einem oberen Teil des Aufnahmerohrs (12) zu treiben,
einen Querrohrabschnitt (18) in Verbindung mit diesem Aufnahmerohrteil (12), wobei dieser Querrohrabschnitt (18) sich zu einem Entgasungsabschnitt (20) dieses oder über diesem Querrohrabschnitt(s) (18) erstreckt,
**dadurch gekennzeichnet, dass** die Vorrichtung (10) so gestaltet ist, dass beim Eintauchen in einer vorbestimmten Tiefe im Flüssigkeitskörper die Vorrichtung (10) sich mit Flüssigkeit bis zu einer Oberkante des Entgasungsabschnitts (20), welcher sich auf einer Ebene über einer Oberfläche des Flüssigkeitskörpers und über dem Querrohrabschnitt (18) befindet, füllt, damit eine Flüssigkeitsspiegeldifferenz erzeugt wird,
und ferner durch diesen Entgasungsabschnitt (20) gekennzeichnet, der dieser Flüssigkeit einen Oberflächenaustausch mit der Luft und dadurch die Entfernung von Gasen aus der Flüssigkeit ermöglicht, und
einen mit dem Querrohrabschnitt (18) verbundenen Ablassrohrteil (16), der unmittelbar unter diesem Entgasungsabschnitt (20) positioniert ist und sich abwärts davon in den Flüssigkeitskörper erstreckt, wodurch die in das Ablassrohr (16) eintretende Flüssigkeit eine erteilte Abwärtsgeschwindigkeit aufgrund der Flüssigkeitsspiegeldifferenz zwischen der Flüssigkeit an der Oberkante des Entgasungsabschnitts (20) hat, die diese nach unten durch das Ablassrohr (16) und zurück in den Flüssigkeitskörper schiebt.

2. Vorrichtung (10) nach Anspruch 1, wobei:
der Aufnahmerohrteil (12) senkrecht ausgerichtet ist,
das Gasdiffusionsmittel (14) innerhalb eines unteren Teils dieses Aufnahmerohrs (12) positioniert ist, um zu ermöglichen, dass dieses Gas in die Flüssigkeit in diesem Aufnahmerohrteil (12) infundiert wird, wodurch die aufsteigenden Blasen aus infundiertem Gas die Flüssigkeit im Aufnahmerohr (12) aufwärts zu einem oberen Teil des Aufnahmerohrs (12) und durch den Querrohrabschnitt (18) in Verbindung mit diesem Aufnahmerohrteil (12) treiben,
der Querrohrabschnitt (18) sich im Wesentlichen senkrecht zu diesem Aufnahmerohr (12) und über diesem Flüssigkeitskörper zum Entgasungsabschnitt (20) erstreckt,
der Entgasungsabschnitt (20) sich über dem Querrohrabschnitt (18) erstreckt, und
der Ablassrohrteil (16) senkrecht ausgerichtet ist.

3. Vorrichtung (10) nach einem der vorhergehenden Ansprüche, wobei der Druck in kPa des diffundierten, in die Flüssigkeit infundierten Gases größer als oder gleich 9,793 Mal der Abstand in Meter ist, den das Diffusionsmittel unter der Flüssigkeitslinie ist.

4. Vorrichtung nach einem der vorhergehenden Ansprüche, wobei das Gasdiffusionsmittel (14) sich angrenzend an der unteren Öffnung davon befindet und der das Gasdiffusionsmittel (14) und die untere Öffnung enthaltende Teil des Aufnahmerohrs (12) sich innerhalb des Flüssigkeitskörpers befindet, mit dem Rest der Vorrichtung (10) über dem Flüssigkeitskörper.

5. Vorrichtung (10) nach einem der vorhergehenden Ansprüche, wobei das Diffusionsmittel (14) ein Ausströmer, eine durchlässige Membrane oder eine Abgasdispersionseinheit aus Filz ist.

6. Vorrichtung (10) nach Anspruch 5, wobei die Gasdispersionseinheit (14) in einem Deckel positioniert ist, der gegen den Aufnahmerohrteil (12) der Vorrichtung abdichtet, um sicherzustellen, dass kein Gas entweicht.

7. Vorrichtung (10) nach einem der vorhergehenden Ansprüche, wobei eine Blasenreduzierungsvorrichtung am oberen Teil des Aufnahmerohrs (12), über dem Diffusionsmittel (14) positioniert ist, um die Tendenz der Gasblasen zum Koaleszieren zu verringern.

8. Vorrichtung (10) nach Anspruch 7, wobei die Blasenreduzierungsvorrichtung eine Vielzahl von Maschenbarrieren aufweist, die eine Reihe von getrennten Durchgängen bilden.

9. Vorrichtung (10) nach einem der vorhergehenden Ansprüche, wobei die Vorrichtung (10) aus geformten Kunststoff ausgebildet ist.

## Revendications

1. Un dispositif (10) pour l'infusion de gaz dans un fluide, le dégazage dudit fluide, puis la réintroduction dudit fluide dégazé dans une masse de fluide, comprenant :
une partie de tube d'admission (12) possédant une ouverture inférieure submersible sous une masse de fluide, de façon à permettre l'introduction de fluide dans ledit tube d'admission (12) ;
un dispositif de diffusion de gaz (14) positionné au sein dudit tube d'admission (12), sous le niveau supérieur de la masse de fluide pour l'infusion de gaz dans le fluide au sein dudit tube d'admission (12), afin de permettre l'infusion dudit gaz dans le liquide dans ledit tube d'admission (12), les bulles de gaz infusé qui remontent étant suffisantes pour déplacer vers le haut le liquide dans le tube d'admission (12), jusqu'à une partie supérieure du tube d'admission (12) ;
une section de tube transversal (18) communiquant avec ladite partie de tube d'admission (12), ladite section de tube transversal (18) s'étendant jusqu'à une section de dégazage (20) de la section de tube transversal (18) ou au-dessus de celle-ci ;
caractérisé d'une part en ce que le dispositif (10) est configuré de sorte que, lorsqu'il est submergé à une profondeur prédéterminée de la masse de fluide, le dispositif (10) se remplisse de fluide jusqu'à une partie supérieure de la section de dégazage (20) située à un niveau au-dessus d'une surface de la masse de fluide, et au-dessus de la section de tube transversal (18), en produisant ainsi un différentiel de charge ;
d'autre part en ce que ladite section de dégazage (20) permet audit fluide d'effectuer un échange à la surface avec l'air, et de là l'extraction de gaz du liquide ; et
une partie de tube de décharge (16) communiquant avec ladite section de tube transversal (18) étant positionnée juste sous ladite section de dégazage (20), et s'étendant de là vers le bas, dans la masse de fluide, le fluide introduit dans le tube de décharge (16) se déplaçant à une vitesse vers le bas en raison du différentiel de charge entre le liquide dans la partie supérieure de la section de dégazage (20), en le poussant dans le tube de décharge (16), puis de nouveau dans la masse de fluide.

2. Un dispositif (10) selon la revendication 1, dans lequel :
la partie de tube d'admission (12) présente une orientation verticale ;
le dispositif de diffusion de gaz (14) est positionné au sein d'une partie inférieure dudit tube d'admission (12), afin de permettre l'infusion dudit gaz dans le liquide dans ladite partie de tube d'admission (12), les bulles de gaz infusé qui remontent déplaçant vers le haut le liquide dans le tube d'admission (12), jusqu'à une partie supérieure du tube d'admission (12) et à travers la section de tube transversal (18) en communication avec ladite partie de tube d'admission (12) ;
la section de tube transversal (18) s'étend de façon substantiellement perpendiculaire audit tube d'admission (12), et au-dessus de ladite masse de fluide jusqu'à la section de dégazage (20) ;
la section de dégazage (20) s'étend au-dessus de la section de tube transversal (18) ; et la partie de tube de décharge (16) est orientée de façon verticale.

3. Un dispositif (10) selon une quelconque des revendications précédentes, la pression en kPa du gaz diffusé dans le fluide étant supérieure ou égale à 9,793 fois la distance en mètres où se trouve le dispositif de diffusion sous la ligne de fluide.

4. Un dispositif selon une quelconque des revendications précédentes, le dispositif de diffusion de gaz (14) étant adjacent à son ouverture inférieure, la partie du tube d'admission (12) comprenant le dispositif de diffusion de gaz (14), et l'ouverture inférieure étant située dans la masse de fluide, le restant du dispositif (10) se trouvant au-dessus de la masse de fluide.

5. Un dispositif (10) selon une quelconque des revendications précédentes, le dispositif de diffusion de gaz (14) étant un bulleur, une membrane perméable ou un dispositif de dispersion des gaz à colonne de feutre.

6. Un dispositif (10) selon la revendication 5, le dispositif de dispersion de gaz (14) étant positionné dans un bouchon assurant une fermeture hermétique contre la partie du tube d'admission (12) du dispositif, afin d'assurer qu'aucune partie du gaz ne puisse s'échapper.

7. Un dispositif (10) selon une quelconque des revendications précédentes, un dispositif de réduction des bulles étant positionné dans la partie supérieure du tube d'admission (12), au-dessus du dispositif de diffusion de gaz (14), afin de réduire la tendance à la coalescence des bulles de gaz.

8. Un dispositif (10) selon la revendication 7, le dispositif de réduction des bulles comprenant une pluralité de barrières à crépine, formant une série de passages séparés.

9. Un dispositif (10) selon une quelconque des revendications précédentes, le dispositif (10) étant réalisé en moulage de matière plastique.
